# EUROPÄISCHE PATENTSCHRIFT

(11) **EP 3 429 798 B1**
(45) Veröffentlichungstag und Bekanntmachung des Hinweises auf die Patenterteilung: **22.03.2023**
(21) Anmeldenummer: 17701137.6
(22) Anmeldetag: 24.01.2017
(51) Int. Cl.: B23K 26/32, B23K 26/082, B23K 26/244, B23K 26/242, B23K 101/18, B23K 103/10

(54) **VERFAHREN ZUM LASERSTRAHLSCHWEISSEN, SCHWEISSVERBINDUNG**
METHOD FOR LASER WELDING, WELDING
PROCEDE DE LASER SOUDAGE, SOUDAGE

(30) Priorität: 18.03.2016 DE 102016204556
(43) Veröffentlichungstag der Anmeldung: 23.01.2019
(73) Patentinhaber: Bayerische Motoren Werke Aktiengesellschaft, 80809 München (DE)
(72) Erfinder: LANGRIEGER, Hans, 80634 München (DE)
(86) Internationale Anmeldenummer: PCT/EP2017/051376
(87) Internationale Veröffentlichungsnummer: WO 2017/157548

(56) Entgegenhaltungen:
- EP-A2- 2 127 795
- WO-A1-2009/024146
- WO-A2-2004/004958
- US-A1- 2012 160 815
- HOWARD K ET AL: "WELDING ALUMINUM SHEET USING A HIGH-POWER DIODE LASER", WELDING JOURNAL, AMERICAN WELDING SOCIETY, MIAMI, FL, US, Bd. 85, Nr. 5, 1. Mai 2006 (2006-05-01), Seiten 101S-110S, XP001506370, ISSN: 0043-2296

## Beschreibung

Die Erfindung betrifft ein Verfahren zum Laserstrahlschweißen einer Stirnkehlnaht mit verringertem Endkrater und eine Schweißnaht mit reduzierter Endkraterbildung sowie eine Laserstrahlschweißvorrichtung.

Zum Laserstrahlschweißen von Stirnkehlnähten am Überlappstoß werden zwei Bauteile teilweise überlappend angeordnet. Der Laserstrahl wird mit einer Vorschubbewegung in eine Schweißrichtung entlang des Fügestoßes geführt, wo er eine Aufschmelzung der Materialien zu einem Schweißbad bewirkt, welches nachfolgend zu einer Schweißnaht erkaltet. Der Fügestoß bzw. die Kehle wird bei einer Stirnkehlnaht gebildet von einer Stirn- oder Flankenfläche des obenliegenden Bauteils (auch Oberblech genannt) und der angrenzenden Oberseite des darunterliegenden Bauteils (Unterblech). Die Bezeichnung Oberblech bzw. Unterblech wird in dieser Anmeldung verwendet, um die Position des Bauteils zu bezeichnen. Bei Ober- und Unterblech muss es sich nicht zwangsläufig um ein aus Blech gefertigtes Bauteil handeln. Die Stirnkehlnaht wird auch als Flankenkehlnaht bezeichnet.

Bei den im Fahrzeugbau, insbesondere in der Automobilindustrie, üblichen Bauteildicken erfolgt das Laserstrahlschweißen als Tiefschweißen, wodurch sich schlanke Nahtgeometrien ergeben. Die Nahtabkühlung erfolgt aufgrund des geringen Schweißbadvolumens mit hoher Geschwindigkeit, es kommt zu einer Werkstoffschrumpfung, die zu einem Nahteinfall am Ende der Naht führt, dem sogenannten Endkrater. Verstärkt wird dieser Effekt noch dadurch, dass Laserschweißungen üblicherweise ohne Zugabe eines Schweißzusatzwerkstoffs erfolgen.

Mit dem Endkrater gehen häufig auch Endkraterrisse einher. Sowohl Endkrater als auch Endkraterrisse wirken als Kerbe in der Schweißnaht und beeinflussen die Festigkeit der Schweißnaht nachteilig. Im Belastungsfall begünstigen sie die Entstehung von größeren Rissen und können bis zum Bauteilversagen führen.

Ein Verfahren zur Reduzierung der Endkraterbildung beim Laserstrahlschweißen ist aus der Druckschrift DE 103 49 677 A1 bekannt. Gemäß dieser Druckschrift wird zum Nahtende die Lasterleistung reduziert, sowie zusätzlich die Schweißgeschwindigkeit reduziert und/oder der Fokus des Laserstrahls von der Oberfläche entfernt und/oder am Nahtende eine über die Naht lateral hinausreichende lokale Strahlbewegung in Form einer Pendelbewegung oder rücklaufenden Spirale durchgeführt. Aus diesen kombinierten Maßnahmen soll eine gleichmäßigere Erstarrungszone im Nahtendbereich resultieren.

Weiterhin ist aus der der Druckschrift DE 20 2012 102 318 U1 ein Ansatz zur Reduzierung von Endkratern und Endkraterrissen bekannt. Gemäß dieser Druckschrift wird eine Schweißnaht ausgebildet, mit einem in einem Fügestoß verlaufenden ersten Schweißnahtabschnitt, an den sich ein bogenförmiger, von dem Fügestoß wegführender zweiter Nahtabschnitt anschließt sowie ein dritter Nahtabschnitt, der von dem zweiten Nahtabschnitt zum ersten Nahtabschnitt zurückgeführt wird und entgegen der Schweißrichtung des ersten Nahtabschnitts verläuft. Die spezielle Gestaltung des zweiten und dritten Schweißnahtabschnitts soll ein gleichmäßigeres Spannungsfeld im Bereich des Schweißnahtendes bewirken und dadurch Endkraterrisse vermeiden. Zudem wird am Schweißnahtende ein Nachwärmeffekt erreicht, durch den Spannungsspitzen vermieden werden sollen.

Aus der Druckschrift US 2012/0160815 A1 ist weiterhin ein Verfahren bekannt, bei dem ein Laserstrahl auf zwei überlappende Werkstücke gerichtet wird. Zur Reduzierung des Endkraters wird die Richtung des Laserstrahls am Ende der Schweißnaht umgekehrt und dieser wird seitlich versetzt zu der Schweißnaht zurückgeführt.

Maßnahmen zur Verringerung eines Endkraters an Endlosnähten sind aus der Druckschrift WO 2004-004958 bekannt, wobei die Streckenenergie im Start/Stopp-Bereich durch eine Kombination von Maßnahmen optimal gesteuert wird. Als zielführend beschrieben wird eine Kombination aus den Maßnahmen
- lineare Steigerung der Laserleistung im Anfangsbereich,
- lineares Absenken der Laserleistung im Stoppbereich bei gleichzeitiger Vergrößerung des Abstands des defokussierten Laserstrahls und
- Überschweißen des Startpunktes um eine vorgegebene Strecke.

De EP 2 127 795 A2 schlägt eine bezüglich der Heißrissneigung optimierte Schweißverbindung vor zwischen einem ersten und einem zweiten Bauteil, die im T-Stoß angeordnet sind, wobei das zweite Bauteil jeweils an seinen Endbereichen eine Aussparung aufweist, durch die die beidseitigen Schweißnähte zwischen dem ersten und zweiten Bauteil unterbrochen sind.

Die bekannten Maßnahmen erzielen eine Reduzierung der Tiefe des Endkraters und des Auftretens von Endkraterrissen, jedoch ist dies häufig nicht ausreichend, insbesondere für Fügeverbindungen von heißrissgefährdeten Materialien. Aufgrund ihrer Legierungselemente, die bei unterschiedlichen Temperaturen erstarren, neigen solche Materialien u.a. zu Erstarrungsrissen, welche verstärkt in offenen Endkratern auftreten.

Aus der Druckschrift WO 2009/024146 A1 ist ein Verfahren zum Verschweißen von Messing und Kupfer bekannt. Die zu verschweißenden Bauteile werden überlappend angeordnet, das Einschweißen erfolgt von der Seite des weniger reflektierenden Materials (Messing).

Der Artikel Howard K et al.: "Welding Aluminium Sheet Using a High-Power Diode Laser", Welding Journal, American Welding Society; Miami, Fl, Us, Bd. 85, Nr 5, 1.Mai 2006, Seite 101S - 110S, XP 001506370, ISSN: 0043-2296 betrifft Schweißungen an Aluminiumblechen mittels eines Hochleistungsdiodenlasers. Die Leistungsdichte des Diodenlasers begrenzt seinen Einsatz auf Schweißungen im Wärmeleitungsmodus, wodurch ein stabiles und ruhiges Schmelzbad erzeugt wird.

Die Aufgabe der vorliegenden Erfindung besteht daher darin, ein Verfahren zum Laserstrahlschweißen von Stirnkehlnähten anzugeben, mit dem Bauteile zuverlässig gefügt werden können unter weitgehender Vermeidung von Endkraterrissen und Endkratern. Weiterhin soll eine einfach und kostengünstig herzustellende, hinsichtlich der Bruchfestigkeit verbesserte Schweißnaht angegeben werden.

Bezüglich des Verfahrens wird die Aufgabe der Erfindung durch die Maßnahmen des Patentanspruchs 1, bezüglich der Schweißnaht durch die Merkmale nach Patentanspruch 8 gelöst. Weitere vorteilhafte Ausgestaltungen der Erfindung ergeben sich aus den Unteransprüchen.

Bei dem erfindungsgemäßen Verfahren wird zunächst ein Stirnkehlnahtabschnitt entlang des Fügestoßes von zwei teilweise überlappenden Bauteilen erzeugt. Ein daran anschließender Nahtendabschnitt wird ausgebildet, von dem schmelzflüssiges Material in den Stirnkehlnahtabschnitt abfließt. Hierzu wird bei Erreichen eines Endpunktes des auszubildenden Stirnkehlnahtabschnitts der Laserstrahl quer zur Vorschubbewegung auf das Oberblech versetzt und die Vorschubbewegung des Laserstrahls in Schweißrichtung wird über eine Zusatzstrecke fortgeführt, während die Leistung des Laserstrahls bis zumindest unter die Tiefschweißschwelle reduziert wird.

Bei der beschriebenen Verfahrensführung wirken nachfolgend beschriebene Effekt zusammen, wodurch eine Verringerung bzw. vollständige Vermeidung der Bildung eines Endkraters und von Endkraterrissen erzielt werden kann. Zum einen stellt der Nahtendabschnitt zusätzliches Schmelzmaterial bereit, das teilweise zur Stirnkehlnaht abfließt und diese auffüllt. Der Versatz des Laserstrahls quer zur Vorschubbewegung unterstützt diesen Schmelzeabfluss in günstiger Art. Durch die Verlegung des Nahtendes in das Oberblech bei gleichzeitiger Reduzierung der Leistung bis unter die Tiefschweißschwelle findet im Endbereich der Naht ein reines Wärmeleitungsschweißen statt ohne Anbindung in das Unterblech, wodurch die Gefahr von Heißrissen, insbesondere von Längsrissen, im Nahtendbereich weiter reduziert wird. Die Schweißrichtung ist für den Stirnkehlnahtabschnitt und den Nahtendabschnitt im Wesentlichen die gleiche. Der Laserstrahl wird jeweils entlang des Fügestoßes geführt, für den Stirnkehlnahtabschnitt in der Kehle, für den Nahtendabschnitt auf das Oberblech versetzt. Hierbei begünstigt die kontinuierlich in eine Richtung voranschreitende Strahlbewegung eine gleichmäßige Erstarrungszone im gesamten Stirnkehlnahtbereich.

Im Gegensatz zur Druckschrift DE 20 2012 102 318 U1, welche eine Rückführung der Naht vorsieht zur Wiederaufwärmung des Nahtbereichs, eignet sich das voranstehend beschriebene Verfahren damit auch insbesondere für Bauteile aus heißrissgefährdeten Legierungen, die bei wiederholtem Aufwärmen zu Wiederaufschmelzrissen in der Wärmeeinflusszone neigen.

Die zu fügenden Bauteile sind vorzugsweise Blechbauteile. Vorzugsweise werden Bauteile aus heißrissgefährdeten Materialien wie z.B. heißrissgefährdeten Aluminiumlegierungen verwendet. Das Verfahren eignet sich insbesondere zum Fügen von Karosseriebauteilen, Karosserieaußenhautbauteilen und Karosserieanbauteilen.

In einer bevorzugten Ausgestaltung erfolgt die Vorschubbewegung des Laserstrahls in Schweißrichtung mit einer konstanten Geschwindigkeit. Verbunden mit der Reduzierung der Laserleistung wird die in den Nahtendabschnitt eingebrachte Streckenenergie zum Nahtende hin reduziert, was sich vorteilhaft auf die Erstarrungszone auswirkt.

In einer weiteren bevorzugten Ausgestaltung wird die Leistung des Laserstrahls zur Erzeugung des Nahtendabschnitts linear reduziert. Vorzugsweise erfolgt die Reduzierung über den gesamten Nahtendabschnitt, d.h. die Reduzierung mit dem Versetzen des Laserstrahls auf das Oberblech und erreicht ihren Minimalwert am Ende der Zusatzstrecke.

Der versetzte Laserstrahl ist soweit in Richtung auf das Oberblech versetzt, dass der Strahlfleck vollständig auf die Oberseite des Oberblechs trifft. Hier schmilzt der Laserstrahl zusätzliches Material des Oberblechs auf, das teilweise in den Bereich der Stirnkehlnaht fließt und dort für eine ausreichende Nahtfüllung sorgt. Für den Abfluss des geschmolzenen Materials ist es vorteilhaft, wenn der Laserstrahl um eine Strecke in Richtung auf das Oberblech versetzt wird, die im Bereich vom 0,5-fachen bis Einfachen der Schweißnahtbreite liegt, insbesondere im Bereich vom 0,5-fachen bis 0,75-fachen der Schweißnahtbreite.

Für die Nahtfüllung ist es weiterhin vorteilhaft, wenn die Zusatzstrecke, um die der Laserstrahl zur Erzeugung des Nahtendabschnitts bewegt wird, in einem Bereich vom 0,8-fachen bis 1,2-fachen der Länge eines theoretischen Endkraters der Stirnkehlnaht liegt, vorzugsweise der Länge des theoretischen Endkraters entspricht. Unter theoretischem Endkrater ist hierbei ein Endkrater zu verstehen, der entsteht, wenn mit denselben Schweißparametern an demselben Bauteilstoß eine herkömmliche Stirnkehlnaht ausgebildet wird. Zur Erzeugung der herkömmlichen Stirnkehlnaht wird der Laserstrahl bei Erreichen des Endpunktes der Stirnkehlnaht abgeschaltet.

Der Versatz des Laserstrahls auf das Oberblech erfolgt sprunghaft. Zur schnellen Strahlpositionierung wird der Laserstrahl in einer bevorzugten Ausgestaltung von einer Remote-Laserstrahlschweißvorrichtung bereitgestellt und geführt. Hierbei kommt ein Laserstrahl hoher Strahlqualität mit einer großen Brennweite, z.B. mehr als 500 mm, zum Einsatz. Der Laserstrahl wird durch eine ein- oder mehrachsige Scanneroptik abgelenkt und bewegt. Die Scanneroptik kann stationär angeordnet sein. Alternativ kann das vom Laserstrahl überstreichbare Arbeitsfeld vergrößert werden, wenn die Scanneroptik von einem Industrieroboter bewegt wird, entweder sequentiell zum Schweißen oder parallel zum Schweißen als "Welding on the fly". Die schnelle Umpositionierbarkeit erzielt besondere Vorteile, wenn das Verfahren zum Schweißen von Steppnähten eingesetzt wird, wobei vorzugsweise jede Naht gemäß dem erfindungsgemäßen Verfahren ausgebildet wird.

Bezüglich der Schweißnaht wird die Erfindung gelöst durch eine Schweißnaht mit einem Hauptabschnitt, der als Stirnkehlnaht zwei teilweise überlappend angeordnete Bauteile miteinander verbindet, und einem an den Hauptabschnitt anschließenden Nahtendabschnitt, in dem die Schweißnaht auf das Oberblech versetzt entlang des Fügestoßes weitergeführt ist. Im Nahtendabschnitt nimmt die Schweißnahttiefe zum Ende hin ab, so dass zumindest am Ende der Schweißnaht lediglich eine Einschweißung in das Oberblech vorliegt.

Durch die Anwendung des voranstehend beschriebenen Verfahrens kann diese Schweißnaht mit vollständiger Nahtfüllung ohne Endkrater ausgebildet werden. Heißrisse können vollständig unterbunden oder zumindest stark reduziert werden.

Die Schweißnaht und das Verfahren eignen sich damit besonders als Fügeverbindung von Bauteilen aus heißrissgefährdeten Materialien, insbesondere heißrissgefährdeten Aluminiumlegierungen. Die Ausbildung der Schweißnaht ist einfach umzusetzen und erfordert keine zusätzlichen Anschaffungskosten.

Besonders vorteilhaft ist es, wenn der Nahtendabschnitt der Schweißnaht gegenüber der Stirnkehlnaht um eine Strecke in Richtung auf das Oberblech versetzt ist, die in einem Bereich vom 0,5 fachen bis Einfachen, insbesondere 0,5-fachen bis 0,75-fachen der Schweißnahtbreite liegt, bezogen auf die Mittellängsachse des Schweißnahtabschnitts.

Ebenso vorteilhaft ist es, wenn der Nahtendabschnitt mit einer Länge ausgebildet ist, die im Bereich vom 0,8-fachen bis 1,2-fachen der Länge des theoretischen Endkraters der Stirnkehlnaht liegt und vorzugsweise der Länge des theoretischen Endkraters entspricht.

Bezüglich der Vorrichtung wird die Aufgabe durch eine Laserstrahlschweißvorrichtung, insbesondere eine Laser-Remoteschweißvorrichtung, gelöst, deren Steuerungsvorrichtung eingerichtet ist, um das voranstehend beschriebene Verfahren durchzuführen.

Die Laserstrahlschweißvorrichtung umfasst eine Laserquelle, sowie Strahlführungs- und -formungsmittel, über die der Laserstrahl zu einem Schweißkopf geführt wird und als schweißfähiger Laserstrahl auf den Fügestoß gerichtet werden kann. Der Schweißkopf kann z.B. von einem mehrachsigen Industrieroboter positioniert und bewegt werden. Handelt es sich um eine Laser-Remoteschweißvorrichtung, so beinhaltet der Schweißkopf eine Scannervorrichtung, mit der der Laserstrahl in zumindest einer Achse ausgelenkt werden kann. Weiterhin kann die Laserstrahlschweißvorrichtung über eine Spannvorrichtung zur Aufnahme und Fixierung der Bauteile und eine Schutzeinhausung, wie z.B. eine Laserzelle verfügen. Eine Steuerungsvorrichtung der Laserstrahlschweißvorrichtung steuert den Schweißprozess inklusive Regelung bzw. Steuerung der Schweißparameter, wie z.B. Laserleistung oder erforderlicher Bewegung des Laserstrahls.

Die Steuerungsvorrichtung ist eingerichtet, um das voranstehend beschriebene Verfahren automatisiert durchzuführen. Beispielsweise können die erforderliche Laserbahn sowie die erforderlichen Schweißparameter programmtechnisch in der Steuerungsvorrichtung abgelegt oder von dieser abfragbar sein.

Eine entsprechend eingerichtete Laserstrahlschweißvorrichtung ermöglicht die automatisierte Durchführung des voranstehend beschriebenen Verfahrens, und eignet sich insbesondere zur Verwendung in hochautomatisierten Fertigungsabläufen, z.B. in der Fahrzeug- bzw. Automobilfertigung.

Vorteilhafter Weise lassen sich bei Anwendung des voranstehend beschriebenen Verfahrens Stirnkehlnähte mit deutlich gesteigerter Festigkeit herstellen. Endkrater in der Stirnkehlnaht werden vollständig oder zumindest weitgehend vermieden. Eine Verwendung von Schweißzusatzwerkstoff ist nicht erforderlich, das Verfahren kann vorzugsweise zusatzwerkstofffrei durchgeführt werden. Zudem werden Risse, insbesondere Heißrisse im Endabschnitt der Naht, reduziert bzw. vollständig unterbunden. Insgesamt kann die Bruchfestigkeit der mit dem Verfahren erzielbaren Schweißnaht gegenüber herkömmlichen Stirnkehlnähten deutlich gesteigert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung.

Im Folgenden werden Ausführungsbeispiele an Hand der beiliegenden Zeichnungen erläutert. Darin zeigen:
Figur 1 eine Draufsicht auf eine herkömmliche Stirnkehlnaht mit Endkrater,
Figur 2 eine Draufsicht auf einen beispielhaften Schweißnahtverlauf zur Vermeidung des Endkraters und
Figur 3 beispielhaft den Verlauf der Laserleistung in Abhängigkeit der Position des Laserstrahls auf der Bauteilanordnung.

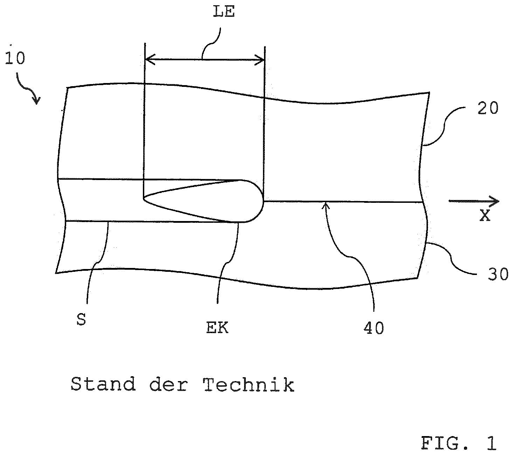

Figur 1 zeigt eine Bauteilanordnung 10 mit zwei Bauteilen 20 und 30, die teilweise überlappend und möglichst spaltfrei angeordnet und fixiert sind. Zur Ausbildung einer herkömmlichen Schweißnaht S wurde ein Laserstrahl einer Remote-Schweißvorrichtung mit ersten Schweißparametern in eine Schweißrichtung X entlang des Fügestoß bzw. der Kehle 40 über die Bauteile 20, 30 geführt, wodurch es zu einer Materialaufschmelzung im Bereich der Kehle und anschließend zur Erstarrung der Schmelze unter Ausbildung einer stoffschlüssigen Verbindung kam. Am beabsichtigten Endpunkt der Schweißnaht S wurde der Laserstrahl abgeschaltet. In Figur 1 ist der resultierende Endkrater EK dargestellt. Die Beschaffenheit des Endkraters, wie z.B. die Endkraterlänge LE ist u.a. abhängig von den gewählten Schweißparametern und den Bauteileigenschaften.

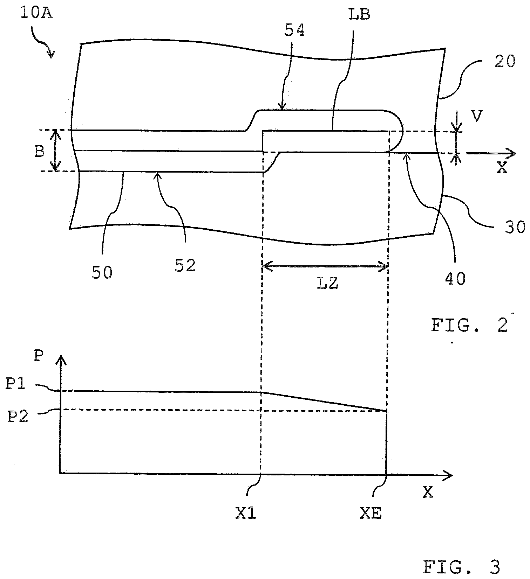

Figur 2 zeigt nun einen beispielhaften Schweißnahtverlauf an einer Bauteilanordnung 10A zur Verdeutlichung eines Verfahrens, mit dem die Bildung eines Endkraters vermieden werden kann. Die Bauteilanordnung 10A stimmt in Art und Anordnung der Bauteile mit der Bauteilanordnung 10 aus Figur 1 überein.

Der Laserstrahl wird mit einer konstanten Geschwindigkeit in Schweißrichtung X über die Bauteilanordnung 10 bewegt. Die Position des Laserstrahls relativ zum Fügestoß 40 ist Figur 2 als Laserbahn LB dargestellt.

Zur Ausbildung der Schweißnaht 50 wird der Laserstrahl zunächst mit denselben Schweißparametern wie in Figur 1 entlang der Kehle 40 über die Bauteile 20, 30 geführt. Bei Erreichen des beabsichtigten Endpunkts X1 des Stirnkehlnahtabschnitts 52 wird der Strahl quer zur Schweißrichtung X auf das Oberblech 20 versetzt und in Schweißrichtung X weitergeführt, so dass der Laserstrahl im Wesentlichen parallel zur Kehle 40 über das Oberblech 20 geführt wird.

Daraus resultiert die in Figur 2 dargestellte Schweißnaht 50, die neben einem Stirnkehlnahtabschnitt 52 weiterhin einen Nahtendabschnitt 54 aufweist, der gegenüber dem Stirnkehlnahtabschnitt 52 auf das Oberblech 20 versetzt ist.

Zur Erzielung einer ausreichenden Aufschmelzung von Material des Oberblechs 20 wird der Laserstrahl mindestens so weit auf das Oberblech 20 versetzt, dass der Strahlfleck vollständig auf der Oberseite des Oberblechs 20 abgebildet wird. Im vorliegenden Beispiel wurde der Laserstrahl um eine Strecke V versetzt, die der Hälfte der Schweißnahtbreite B entspricht. Ein guter Materialfluss von geschmolzenem Material des Oberblechs hin zur Stirnkehlnaht kann jedoch auch noch erzielt werden, wenn der Laserstrahl um maximal eine ganze Schweißnahtbreite auf das Oberblech versetzt wird.

Der Laserstrahl wird auf dem Oberblech 20 um eine vorgegebene Zusatzstrecke LZ weitergeführt. Die Länge der Zusatzstrecke wird in Abhängigkeit der Schweißparameter und der verwendeten Bauteile so gewählt, dass ausreichend Material aufgeschmolzen wird, um für eine gefüllte Schweißnaht am Ende der Stirnkehlnaht zu sorgen. Es hat sich gezeigt, dass die Länge der Zusatzstrecke idealerweise so gewählt wird, dass sie der Länge LE des Endkraters EK entspricht, der mit einer herkömmlichen Schweißung bei gleichen Materialien und Parametern entstehen würde, s. Figur 1. Jedoch wird auch eine ausreichende Auffüllung erzielt, wenn die Länge der Zusatzstrecke in einem Bereich vom 0,8-fachen bis 1,2-fachen der Endkraterlänge LE liegt.

Zusätzlich zum Versatz des Laserstrahls wird die Leistung des Laserstrahls reduziert. Figur 3 zeigt beispielhaft den Verlauf der Laserleistung in Abhängigkeit der Position des Laserstrahls auf der Bauteilanordnung. Während zum Ausbilden der Stirnkehlnaht mit einer Schweißleistung P1 geschweißt wird, wird die Leistung reduziert, sobald der Laserstrahl auf das Oberblech 20 versetzt ist. Die Reduzierung erfolgt vorzugsweise kontinuierlich, Figur 3 zeigt eine lineare Reduzierung auf den Minimalwert P2, wobei P2 am Ende der Schweißung am Punkt XE erreicht wird. P2 ist so gewählt, dass im Nahtendabschnitt 54, spätestens jedoch mit Erreichen von P2, die Tiefschweißschwelle unterschritten wird. Es findet somit am Ende XE des Nahtendabschnitts keine Tiefschweißung mehr statt und somit keine Anbindung des Oberblechs 20 an das darunter liegende Bauteil 30. Die Reduzierung der Schweißleistung begünstigt eine gleichmäßigere Erstarrung und verhindert die Entstehung von Heißrissen.

Durch den versetzten Nahtendabschnitt 54 der Schweißnaht 50 wird zusätzliches Material des Oberblechs aufgeschmolzen, wobei durch den stufenartigen Versatz des Laserstrahls ein Abfließen der Schmelze in Richtung zur Kehle 40 begünstigt wird, wodurch ein Auffüllen des Schweißbads im Stirnkehlnahtabschnitts erzielt wird.

Das voranstehend beschriebene Verfahren eignet sich insbesondere für Stirnkehlnähte an Blechbauteilen aus heißrissgefährdeten Aluminiumlegierungen mit einer Blechdicke im Bereich von 0,8 bis 3 mm.

Besondere Vorteile erzielt das Verfahren bei Steppnähten mit einer Vielzahl von kurzen, z.B. 20 bis 40 mm langen Stirnkehlnähten. Solche Nähte wurden an Blechbauteilen aus EN AW-6008, einer heißrissgefährdeten Aluminiumlegierung, mit einer Dicke von jeweils 1,2 mm durchgeführt. Es wurde eine Laser-Remoteanlage verwendet, die Brennweite des Laserstrahls betrug 660 mm und der Fokusdurchmesser 0,6 mm, mit Fokuslage in der Kehle.

Zunächst wurde mit einer Schweißgeschwindigkeit von 9 m/s und einer Schweißleistung von 4,6 kW eine herkömmliche Stirnkehlnaht (s. Figur 1) mit einer Länge von 34 mm geschweißt. Mit Erreichen des programmierten Endpunktes der Stirnkehlnaht wurde der Laserstrahl abgeschaltet. Es entstand ein deutlich ausgeprägter Endkrater mit einer Länge von 6 mm.

Nachfolgend wurden weitere Schweißnähte nach dem mit Bezug auf die Figuren 2 und 3 beschriebenen Verfahren ausgebildet. Hierzu wurde zunächst eine Stirnkehlnahtabschnitt geschweißt mit denselben Schweißparametern wie zu der herkömmlichen Stirnkehlnaht beschrieben. Am programmierten Endpunkt des Stirnkehlnahtabschnitts wurde der Laserstrahl um 1 mm (halbe Nahtbreite) in Richtung auf das Oberblech versetzt, wobei die Schweißgeschwindigkeit beibehalten wurde. Es wurde ein Nahtendabschnitt mit einer Länge von 6mm, der Länge des zuvor gemessenen Endkraters, geschweißt, wobei über die Länge des Nahtendabschnitts eine lineare Reduzierung der Laserleistung um 20% vorgenommen wurde. Bei Erreichen des Endpunkts des Nahtendabschnitts wurde der Laser abgeschaltet.

Gegenüber der herkömmlichen Stirnkehlnaht konnte bei den mit dem erfindungsgemäßen Verfahren ausgebildeten Schweißnähten die Bruchkraft um 15 Prozent und die Bruchenergie um 20 Prozent gesteigert werden, sowie eine Verringerung der Streuungsbreite der Festigkeitswerte auf 2% vom Mittelwert erzielt werden.

Die Ausführungsbeispiele sind nicht maßstabsgetreu und nicht beschränkend. Abwandlungen im Rahmen des fachmännischen Handelns sind möglich.

## Patentansprüche

1. Verfahren zum Laserstrahlschweißen einer Stirnkehlnaht mit verringertem Endkrater,
bei dem ein Laserstrahl zur Erzeugung eines Stirnkehlnahtabschnitts (52) mit einer Vorschubbewegung in eine Schweißrichtung (X) entlang eines Fügestoßes (40) zweier teilweise überlappend angeordneter Bauteile (20, 30) geführt wird,
wobei
ein an den Stirnkehlnahtabschnitt (52) anschließender Nahtendabschnitt (54) ausgebildet wird, von dem schmelzflüssiges Material in den Stirnkehlnahtabschnitt (52) abfließt, indem bei Erreichen eines Endpunktes des auszubildenden Stirnkehlnahtabschnitts (52) der Laserstrahl quer zur Vorschubbewegung auf das Oberblech (20) versetzt wird und die Vorschubbewegung des Laserstrahls in die Schweißrichtung über eine Zusatzstrecke fortgeführt wird, während die Leistung (P) des Laserstrahls bis zumindest unter die Tiefschweißschwelle reduziert wird.

2. Verfahren nach Patentanspruch 1,
bei dem die Bauteile (20, 30) aus heißrissgefährdeten Aluminiumlegierungen gebildet sind.

3. Verfahren nach Patentanspruch 1 oder 2,
bei dem die Vorschubbewegung des Laserstrahls in Schweißrichtung (X) mit konstanter Geschwindigkeit erfolgt.

4. Verfahren nach einem der vorangehenden Patentansprüche, bei dem die Leistung (P) linear reduziert wird.

5. Verfahren nach einem der vorangehenden Patentansprüche, bei dem der Laserstrahl um eine Strecke (V) in Richtung auf das Oberblech (20) versetzt wird, die im Bereich vom 0,5-fachen bis Einfachen der Schweißnahtbreite (B) liegt, oder im Bereich vom 0,5-fachen bis 0,75-fachen der Schweißnahtbreite (B) .

6. Verfahren nach einem der vorangehenden Patentansprüche, wobei der Nahtendabschnitt (54) mit einer Länge (LZ) ausgebildet wird, die in einem Bereich vom 0,8-fachen bis 1,2-fachen der Länge (LE) eines theoretischen Endkraters der Stirnkehlnaht liegt oder die der Länge des theoretischen Endkraters entspricht.

7. Verfahren nach einem der vorangehenden Patentansprüche, bei dem der Laserstrahl einer Remote-Laserschweißvorrichtung über die Bauteile (20, 30) gelenkt wird.

8. Bauteilverbindung mit:
zwei Bauteilen (20, 30) und einer Schweißnaht,
wobei die Schweißnaht einen Hauptabschnitt aufweist, der als Stirnkehlnaht (52) die zwei teilweise überlappend angeordneten Bauteile (20, 30), miteinander verbindet,
**dadurch gekennzeichnet, dass**
an den Hauptabschnitt einNahtendabschnitt (54) anschließt, in dem die Schweißnaht (S) auf das Oberblech (20) versetzt entlang des Fügestoßes (40) weitergeführt ist, wobei die Schweißnahttiefe im Nahtendabschnitt (54) zum Ende hin abnimmt und zumindest am Ende der Schweißnaht lediglich eine Einschweißung in das Oberblech (20) vorliegt.

9. Bauteilverbindung nach Patentanspruch 8,
wobei die Bauteile aus heißrissgefährdeten Aluminiumlegierungen gebildet sind.

10. Bauteilverbindung nach Patentanspruch 8 oder 9,
bei der der Nahtendabschnitt (54) gegenüber dem Hauptabschnitt (52) um eine Strecke (V) in Richtung auf das Oberblech (20) versetzt ist, die im Bereich vom 0,5-fachen bis Einfachen der Schweißnahtbreite (B) liegt oder im Bereich vom 0,5-fachen bis 0,75-fachen der Schweißnahtbreite (B) .

11. Bauteilverbindung nach einem der Patentansprüche 8 bis 10,
wobei die Länge (LZ) des Nahtendabschnitts im Bereich von 0,8-fachen bis 1,2 -fachen der Länge (LE) eines theoretischen Endkraters der Stirnkehlnaht liegt oder der Länge (LE) des theoretischen Endkraters entspricht.

## Claims

1. Method for the laser beam welding of an edge fillet weld with a diminished end crater,
in which method a laser beam for generating an edge fillet weld portion (52) is guided with an advancing movement in a welding direction (X) along a joint (40) of two partially overlapping components (20, 30),
wherein
a weld end portion (54) adjoining the edge fillet weld portion (52) is formed, from which weld end portion molten material flows out into the edge fillet weld portion (52) in that, when an end point of the edge fillet weld portion (52) to be formed is reached, the laser beam is offset onto the top metal sheet (20) transversely to the advancing movement, and the advancing movement of the laser beam is continued in the welding direction over an additional distance, while the power (P) of the laser beam is reduced to at least below the deep-welding threshold.

2. Method according to Patent Claim 1,
in which the components (20, 30) are made from aluminium alloys that are at risk of hot cracking.

3. Method according to Patent Claim 1 or 2,
in which the advancing movement of the laser beam in the welding direction (X) is effected at a constant speed.

4. Method according to one of the preceding patent claims,
in which the power (P) is reduced linearly.

5. Method according to one of the preceding patent claims,
in which the laser beam is offset towards the top metal sheet (20) by a distance (V) which is in the range from 0.5 times to once the weld seam width (B), or in the range from 0.5 times to 0.75 times the weld seam width (B) .

6. Method according to one of the preceding patent claims,
wherein the weld end portion (54) is formed with a length (LZ) which is in a range from 0.8 times to 1.2 times the length (LE) of a theoretical end crater of the edge fillet weld or which corresponds to the length of the theoretical end crater.

7. Method according to one of the preceding patent claims,
in which the laser beam of a remote laser welding device is deflected over the components (20, 30).

8. Component connection having:
two components (20, 30) and a weld seam,
wherein the weld seam has a main portion which connects the two partially overlapping components (20, 30) to one another in the form of an edge fillet weld (52),
**characterized in that**
adjoining the main portion is a weld end portion (54), at which the weld seam (S) is continued along the joint (40) by being offset onto the top metal sheet (20), wherein the weld seam depth in the weld end portion (54) decreases towards the end and, at least at the end of the weld seam, there is only one welding into the top metal sheet (20).

9. Component connection according to Patent Claim 8, wherein the components are made from aluminium alloys that are at risk of hot cracking.

10. Component connection according to Patent Claim 8 or 9,
in the case of which the weld end portion (54) is offset with respect to the main portion (52) towards the top metal sheet (20) by a distance (V) which is in the range from 0.5 times to once the weld seam width (B) or in the range from 0.5 times to 0.75 times the weld seam width (B) .

11. Component connection according to one of Patent Claims 8 to 10,
wherein the length (LZ) of the weld end portion is in the range from 0.8 times to 1.2 times the length (LE) of a theoretical end crater of the edge fillet weld or corresponds to the length (LE) of the theoretical end crater.

## Revendications

1. Procédé de soudage par faisceau laser d'une soudure d'angle frontale à cratère d'extrémité réduit,
dans lequel un faisceau laser est guidé pour produire une section de soudure d'angle frontale (52) avec un mouvement d'avance dans une direction de soudage (X) le long d'un joint (40) de deux composants (20, 30) agencés partiellement en chevauchement,
dans lequel
une section d'extrémité de soudure (54) se raccordant à la section de soudure d'angle frontale (52) est réalisée, à partir de laquelle du matériau en fusion s'écoule dans la section de soudure d'angle frontale (52), en ce que, lorsqu'un point final de la section de soudure d'angle frontale (52) à réaliser est atteint, le faisceau laser est décalé transversalement au mouvement d'avance sur la tôle supérieure (20) et le mouvement d'avance du faisceau laser dans la direction de soudage est poursuivi sur une distance supplémentaire, tandis que la puissance (P) du faisceau laser est réduite au moins jusqu'en dessous du seuil de soudage profond.

2. Procédé selon la revendication 1, dans lequel les composants (20, 30) sont formés d'alliages d'aluminium présentant un risque de fissuration à chaud.

3. Procédé selon la revendication 1 ou 2, dans lequel le mouvement d'avance du faisceau laser dans la direction de soudage (X) est effectué à vitesse constante.

4. Procédé selon l'une quelconque des revendications précédentes, dans lequel la puissance (P) est réduite de manière linéaire.

5. Procédé selon l'une quelconque des revendications précédentes, dans lequel le faisceau laser est décalé en direction de la tôle supérieure (20) d'une distance (V) qui se situe dans la plage de 0,5 fois à une fois la largeur du cordon de soudure (B), ou dans la plage de 0,5 fois à 0,75 fois la largeur du cordon de soudure (B).

6. Procédé selon l'une quelconque des revendications précédentes, dans lequel la section d'extrémité de soudure (54) est réalisée avec une longueur (LZ) qui se situe dans une plage de 0,8 fois à 1,2 fois la longueur (LE) d'un cratère d'extrémité théorique de la soudure d'angle frontale ou qui correspond à la longueur du cratère d'extrémité théorique.

7. Procédé selon l'une quelconque des revendications précédentes, dans lequel le faisceau laser d'un dispositif de soudage laser à distance est dirigé sur les composants (20, 30).

8. Assemblage de composants avec :
deux composants (20, 30) et un cordon de soudure,
le cordon de soudure présentant une section principale qui, en tant que soudure d'angle frontale (52), relie entre eux les deux composants (20, 30) agencés partiellement en chevauchement,
**caractérisé en ce que**
une section d'extrémité de soudure (54) se raccorde à la section principale, dans laquelle le cordon de soudure (S) se poursuit sur la tôle supérieure (20) en étant décalé le long du joint (40), la profondeur du cordon de soudure dans la section d'extrémité de soudure (54) diminuant vers l'extrémité et, au moins à l'extrémité du cordon de soudure, seulement un soudage dans la tôle supérieure (20) étant présent.

9. Assemblage de composants selon la revendication 8, dans lequel les composants sont formés d'alliages d'aluminium présentant un risque de fissuration à chaud.

10. Assemblage de composants selon la revendication 8 ou 9, dans lequel la section d'extrémité du soudure (54) est décalée en direction de la tôle supérieure (20) par rapport à la section principale (52) d'une distance (V) qui se situe dans la plage de 0,5 fois à une fois la largeur du cordon de soudure (B) ou dans la plage de 0,5 fois à 0,75 fois la largeur du cordon de soudure (B).

11. Assemblage de composants selon l'une quelconque des revendications 8 à 10,
dans lequel la longueur (LZ) de la section d'extrémité de soudure se situe dans la plage de 0,8 à 1,2 fois la longueur (LE) d'un cratère d'extrémité théorique de la soudure d'angle frontale ou correspond à la longueur (LE) du cratère d'extrémité théorique.
